# EUROPÄISCHE PATENTANMELDUNG

(11) **EP 4 585 958 A1**
(43) Veröffentlichungstag der Anmeldung: **16.07.2025**
(21) Anmeldenummer: 24214000.2
(22) Anmeldetag: 19.11.2024
(51) Int. Cl.: G01S 7/292, G01S 7/35, G01S 7/40, G01S 7/41, G01S 13/42, G01S 13/524, G01S 13/58, G01S 13/931, G01S 7/28

(54) **VERFAHREN ZUM UNTERDRÜCKEN VON FEHLDETEKTION UND SENSORVORRICHTUNG**

(30) Priorität: 12.01.2024 DE 102024100829
(71) Anmelder: SICK AG, 79183 Waldkirch (DE)
(72) Erfinder: SCHWARZKOPF, Sebastian, 22949 Ammersbek (DE)
(74) Vertreter: Manitz Finsterwald Patent- und Rechtsanwaltspartnerschaft mbB

(57) **Zusammenfassung**

Ein Verfahren zum Unterdrücken von Fehldetektion, insbesondere Niederschlagsdetektion, bei einem Radarsensor, welcher in Messzyklen Primärsignale aussendet und von Zielobjekten reflektierte Sekundärsignale empfängt, umfasst folgende Schritte:
- Bilden eines Winkelspektrums für einen Teildatensatz der reflektierten Signale, wobei das Winkelspektrum den Signalstärkenverlauf der entsprechenden reflektierten Signale über einen Winkel relativ zum Radarsensor angibt,
- Ermitteln eines Rauschpegels für das Winkelspektrum in Abhängigkeit von dem Signalstärkenverlauf und Bestimmen einer Detektionsschwelle auf Grundlage des Rauschpegels und
- Detektieren von Zielobjekten durch Abgleich des Winkelspektrums mit der Detektionsschwelle.

## Beschreibung

Die Erfindung betrifft ein Verfahren zum Unterdrücken von Fehldetektion, insbesondere Niederschlagsdetektion, bei einem Radarsensor, insbesondere bei einem Puls-Doppler-Radarsensor, Dauerstrich- (CW-) oder FMCW-Radarsensor, welcher in Messzyklen Primärsignale aussendet und von Zielobjekten reflektierte Sekundärsignale empfängt. Ferner betrifft die Erfindung eine Sensorvorrichtung, die einen Radarsensor, insbesondere einen Puls-Doppler-Radarsensor, Dauerstrich-(CW-) oder FMCW-Radarsensor, aufweist, welcher ausgebildet ist, in Messzyklen Primärsignale auszusenden und von Zielobjekten reflektierte Sekundärsignale zu empfangen.

Radarsensoren können auch bei Niederschlag mit nur geringer Beeinträchtigung messen. Jedoch werden vom Niederschlag schwache Reflektionen empfangen, welche meist unerwünscht sind. Insbesondere Sensoren, die nach dem Rapid-Chirp-Verfahren messen, sind in der Lage, in einem Messzyklus mehrere Objekte sowohl über die radiale Entfernung als auch über die Geschwindigkeit zu trennen. Um dabei insbesondere eine rennende Person in vergleichsweise großer Entfernung detektieren zu können, wird eine erweiterte Signalanalyse mit abgesenkter Detektionsschwelle nötig. Dies liegt darin begründet, dass einzelne Körperteile von Läufern in der Regel unterschiedliche Bewegungsgeschwindigkeiten haben. So bewegen sich etwa die Beine eines Läufers mit einer anderen Geschwindigkeit als der Torso. Aufgrund dessen werden die Reflektionen von Läufern im Radarsensor über mehrere Geschwindigkeitsbins "verschmiert" aufgenommen.

Allerdings bildet sich starker Regen vergleichbar ausgedehnt in der Geschwindigkeitsdimension ab, sodass es bei der verbesserten Erkennung rennender Personen aufgrund der abgesenkten Detektionsschwelle auch zu einer erhöhten Falschalarmrate bei starkem Regen kommen kann.

Um dieses Problem zu lösen, schlägt etwa die US 4,811,020 A eine Unterdrückung durch polarimetrische Maßnahmen vor. Dies ist aber hardwaretechnisch und in der Entwicklung sehr aufwändig.

Zudem ist es bekannt, die Detektion im Detektionsprozess durch Erhöhung der Detektionsschwelle oder Erkennung des Regenmusters in der Detektionsmatrix zu unterdrücken. Jedoch werden durch eine höhere Schwelle auch solche Objekte unterdrückt, deren Unterdrückung ungewollt ist, wie die angesprochenen Läufer. Das Muster von Regen ist sehr variabel und lässt sich etwa schwer von einer Gruppe von Läufern oder einem Läufer im Regen unterscheiden.

Schließlich ist es bekannt, eine Auswertung der Detektionen über die Zeit vorzunehmen, siehe EP 0 974 851 A3. Dies liefert jedoch erst nach mehreren Messzyklen Ergebnisse und impliziert eine aufwändige Verarbeitung.

Es ist eine Aufgabe der vorliegenden Erfindung, Fehldetektionen, insbesondere Niederschlagsdetektionen, kostengünstig, zuverlässig und mit geringem Aufwand zu unterdrücken.

Diese Aufgabe wird durch den Gegenstand der unabhängigen Ansprüche gelöst. Vorteilhafte Weiterbildungen sind Gegenstand der abhängigen Ansprüche und ergeben sich aus der Beschreibung sowie den Zeichnungen.

Das erfindungsgemäße Verfahren dient zum Unterdrücken von Fehldetektion, insbesondere zum Unterdrücken von Niederschlagsdetektion oder auch von Sand oder Staub, bei einem Radarsensor, insbesondere bei einem Puls-Doppler-Radarsensor, Dauerstrich- (CW-) oder einem FMCW-Radarsensor ("frequency modulated continuous wave radar"), welcher in Messzyklen Primärsignale aussendet und von Zielobjekten reflektierte Sekundärsignale empfängt. Das Verfahren umfasst folgende Schritte:
- Bilden eines Winkelspektrums für einen Teildatensatz der reflektierten Signale, wobei das Winkelspektrum den Signalstärkenverlauf der entsprechenden reflektierten Signale über einen Winkel relativ zum Radarsensor angibt,
- Ermitteln eines Rauschpegels für das Winkelspektrum in Abhängigkeit von dem Signalstärkenverlauf und Bestimmen einer Detektionsschwelle auf Grundlage des Rauschpegels und
- Detektieren von Zielobjekten durch Abgleich des Winkelspektrums mit der Detektionsschwelle.

Das Verfahren dient insbesondere dazu, Fehldetektionen aufgrund von Störungen wie Niederschlag, das heißt insbesondere Regen oder Schnee, oder Staub zu unterdrücken. Die Reflektionen derartiger Störungen werden im Winkelspektrum in der Regel nicht lokal konzentriert, sondern verbreitet über das gesamte Winkelspektrum auf einem näherungsweise einheitlichen Niveau empfangen. Diese Reflektionen können als Rauschen erkannt werden. Die Erfindung setzt auf dieser Erkenntnis auf und nutzt sie, um die Detektionsschwelle an das Niveau dieses Rauschens, den Rauschpegel, anzupassen und so tatsächliche Hindernisse besser von Störungen unterscheiden zu können. Bei dem Rauschpegel handelt es sich dabei um einen bestimmten Wert, der etwa einem Mittelwert der Signalstärke des Rauschens entspricht.

Das Winkelspektrum bildet die Signalstärke bzw. den Signalstärkenverlauf der reflektierten Signale über einen Winkel relativ zum Radarsensor ab. Der Winkel entspricht insbesondere dem gesamten Erfassungswinkelbereich des Radarsensors innerhalb einer Erfassungsebene, welche häufig, aber nicht notwendigerweise horizontal ausgerichtet ist.

In diesem Winkelspektrum bilden Hindernisse und insbesondere Läufer üblicherweise aufgrund der stärkeren Reflektionsenergie im Vergleich zum störungsbedingten Rauschpegel ein deutliches örtliches Maximum. Um dieses örtliche Maximum bei der Datenanalyse von dem Rauschpegel unterscheiden zu können, schlägt die Erfindung vor, den Rauschpegel in Abhängigkeit von dem Signalstärkenverlauf zu ermitteln und wiederum darauf aufbauend die Detektionsschwelle zu bestimmen. So kann gewährleistet werden, dass sich die Detektionsschwelle immer an den derzeitigen Rahmenbedingungen orientiert, da der Rauschpegel bei starkem Niederschlag beispielsweise größer ist als wenn kein Niederschlag vorhanden ist. So werden tatsächliche Hindernisse, wie etwa Läufer, immer zuverlässig erkannt, unabhängig von dem Vorhandensein bzw. der Stärke eventueller Störungen.

Der Begriff "Teildatensatz" kann (nur) einen Teil der reflektierten Signale oder aber auch die gesamten reflektierten Signale umfassen. Insbesondere können die reflektierten Signale anhand eines bestimmten Kriteriums untersucht werden, wobei dann nur für einen Teil dieser reflektierten Signale das Winkelspektrum gebildet wird, nämlich für den Teil, der das Kriterium erfüllt. Darauf wird später noch näher eingegangen.

Vorzugsweise wird ein Zielobjekt in den Winkelbereichen des Winkelspektrums detektiert, in denen der Signalstärkenverlauf die Detektionsschwelle überschreitet. Die Detektionsschwelle ist damit das Kriterium, welches zum Detektieren eines Zielobjekts oder Hindernisses herangezogen wird. Aufgrund der Nutzung des Winkelspektrums lässt sich zudem der Winkel des Zielobjekts relativ zum Radarsensor zuverlässig einschätzen.

Insbesondere kann das Zielobjekt nur dann detektiert werden, wenn ein zusammenhängender Winkelbereich, in dem der Signalstärkenverlauf die Detektionsschwelle überschreitet, kleiner als ein vorbestimmter maximaler Winkelbereich ist. Der vorbestimmte maximale Winkelbereich kann vorzugsweise etwa bei 20°, 30°, 40°, 50° oder 60°, insbesondere bei etwa 45° liegen. Dabei wird die Erkenntnis berücksichtigt, dass ein weiter entferntes Zielobjekt in einem kleineren Winkelbereich erfasst wird bzw. Sekundärsignale reflektiert als ein näheres Zielobjekt. Insbesondere kann der vorbestimmte maximale Winkelbereich abhängig von einer radialen Entfernung des Zielobjekts zu dem Radarsensor sein, wobei vorzugsweise der maximale Winkelbereich mit zunehmender Entfernung zum Zielobjekt kleiner wird.

Der Rauschpegel kann durch Rauschschätzung ermittelt werden. Die Rauschschätzung kann insbesondere durch Anwendung eines Medianfilters erfolgen, sodass der Median des Signalstärkenverlaufs bestimmt wird und die Rauschschätzung auf Basis des Medians erfolgt. Alternativ dazu denkbar ist grundsätzlich auch die Rauschschätzung durch das Bestimmen des Mittelwerts über den Signalstärkenverlauf. Gegenüber der Verwendung des Mittelwerts hat das Zurückgreifen auf den Median allerdings den Vorteil, dass dieser durch große Ausschläge im Signalstärkenverlauf weniger beeinflusst wird. Basierend auf dem durch Rauschschätzung ermittelten Rauschpegel kann nachfolgend die Detektionsschwelle als parametrierbare Schwelle ermittelt werden, wie nachfolgend noch genauer beschrieben wird.

Vorzugsweise wird die Detektionsschwelle als ein Vielfaches des Rauschpegels bestimmt, wobei die Detektionsschwelle parametrierbar sein kann und durch Anwenden eines Faktors von etwa 5 bis 15, vorzugsweise etwa 8 bis 12, insbesondere etwa 10 (entsprechend 10 dB), auf den Rauschpegel bestimmt werden kann. Durch das Anwenden des Faktors ist sichergestellt, dass auch gewisse Überschreitungen des Rauschpegels durch Schwankungen in der Signalstärke der reflektierten Sekundärsignale noch nicht fälschlicherweise als Zielobjekt detektiert werden.

Vorteilhaft weist das Verfahren den folgenden Schritt auf, welcher insbesondere dem Schritt des Bildens des Winkelspektrums vorgelagert ist:
- Erstellen einer Detektionsmatrix mit einer Vielzahl von Bins auf Grundlage der empfangenen Sekundärsignale in einem jeden Messzyklus, wobei jeder Bin eine Signalstärke der reflektierten Signale für eine bestimmte radiale Entfernung des Zielobjekts zu dem Radarsensor und für eine bestimmte Geschwindigkeit des Zielobjekts angibt. Jeder Bin entspricht demnach einer bestimmten radialen Entfernung und einer bestimmten Geschwindigkeit des Zielobjekts relativ zum Radarsensor. Die entsprechenden Reflexionen, das heißt die reflektierten Signale, werden dahingehend aufgelöst und einem jeden Bin zugeordnet.

Die radiale Entfernung des Zielobjekts zu dem Radarsensor kann insbesondere durch eine Analyse der Laufzeit ermittelt werden, wobei die Laufzeit der Zeit zwischen dem Aussenden eines Primärsignals und dem Empfangen des entsprechenden reflektierten Sekundärsignals entspricht. Die radiale Entfernung entspricht der Hälfte des Wegs, welchen die Signale in dieser Zeit zurücklegen.

Der Teildatensatz kann durch die Bins der Detektionsmatrix gebildet werden, welche eine Signalstärke oberhalb eines vorbestimmten Schwellwerts angeben. Das heißt nur für diese Bins wird anhand des Winkelspektrums eine weitere Analyse durchgeführt, ob lediglich ein Rauschen aufgrund von Störungen oder ein tatsächliches Zielobjekt vorliegt. Dabei kann jedes Bin separat ausgewertet werden.

Die Geschwindigkeit des Zielobjekts wird insbesondere durch Durchführen einer Doppler-Analyse ermittelt. Dabei wird die Dopplerverschiebung und somit die relative Geschwindigkeit des Zielobjekts ermittelt.

Vorzugsweise ist der (Dauerstrich-)Radarsensor als MIMO-Radarsensor (multiple input multiple output) ausgebildet. Insbesondere weist dieser mehrere Sende- und Empfangsmodule auf, welche entsprechende Sende- oder Empfangsantennen aufweisen. Dabei können Sende- und Empfangsmodule beliebig miteinander kombiniert werden. Die unterschiedlichen Sendeantennen der Sendemodule senden individuelle Primärsignale aus, sodass die empfangenen reflektierten Sekundärsignale der jeweiligen Sendeantenne zugeordnet werden können. Dadurch lassen sich Zielobjekte genauer orten.

Die Erfindung betrifft ferner eine Vorrichtung zur Datenverarbeitung, umfassend Mittel zur Ausführung des oben beschriebenen Verfahrens, ein Computerprogramm, umfassend Befehle, die bei der Ausführung des Programms durch einen Computer diesen veranlassen, das oben beschriebene Verfahren auszuführen, sowie ein computerlesbares Speichermedium, umfassend Befehle, die bei der Ausführung durch einen Computer diesen veranlassen, das oben beschriebene Verfahren auszuführen.

Zudem betrifft die Erfindung eine Sensorvorrichtung, die einen Radarsensor, insbesondere einen Puls-Doppler-Radarsensor, Dauerstrich- (CW-) oder einen FMCW-Radarsensor, der ausgebildet ist, in Messzyklen Primärsignale auszusenden und von Zielobjekten reflektierte Sekundärsignale zu empfangen, und eine Detektionseinheit aufweist. Die Detektionseinheit ist ausgebildet,
- ein Winkelspektrum für einen Teildatensatz der reflektierten Signale zu bilden, wobei das Winkelspektrum den Signalstärkenverlauf der entsprechenden reflektierten Signale über einen Winkel relativ zum Radarsensor angibt,
- einen Rauschpegel für das Winkelspektrum in Abhängigkeit von dem Signalstärkenverlauf zu ermitteln und eine Detektionsschwelle auf Grundlage des Rauschpegels zu bestimmen, und
- Zielobjekte durch Abgleich des Winkelspektrums mit der Detektionsschwelle zu detektieren.

Vorzugsweise ist der (Dauerstrich-)Radarsensor als MIMO-Radarsensor mit mehreren Sende- und Empfangsmodulen ausgestaltet, welche entsprechende Sende- oder Empfangsantennen aufweisen.

Die Detektionseinheit kann ausgebildet sein, eine Detektionsmatrix mit einer Vielzahl von Bins auf Grundlage der empfangenen Sekundärsignale in einem jeden Messzyklus zu erstellen, wobei jeder Bin eine Signalstärke der reflektierten Signale entsprechend einer radialen Entfernung des Zielobjekts zu dem Radarsensor und einer Geschwindigkeit des Zielobjekts angibt.

Die oben im Zusammenhang mit dem Verfahren zum Unterdrücken von Fehldetektion gemachten Angaben gelten gleichermaßen und entsprechend für die beschriebene Sensorvorrichtung und umgekehrt. Gleiches gilt für die Vorrichtung zur Datenverarbeitung, das Computerprogramm und das computerlesbare Speichermedium.

Die Erfindung wird nachfolgend rein beispielhaft anhand eines in den Zeichnungen schematisch gezeigten Ausführungsbeispiels erläutert. Dabei zeigt:
- Fig. 1: eine schematische Draufsicht eines Fahrzeugs als Anwendungsbeispiel für die vorliegende Erfindung mit einer Sensorvorrichtung,
- Fig. 2: eine graphische Darstellung eines typischen Winkelspektrums bei Anwesenheit eines Läufers,
- Fig. 3: eine graphische Darstellung eines typischen Winkelspektrums bei Niederschlag und
- Fig. 4: eine graphische Darstellung einer Detektionsmatrix.

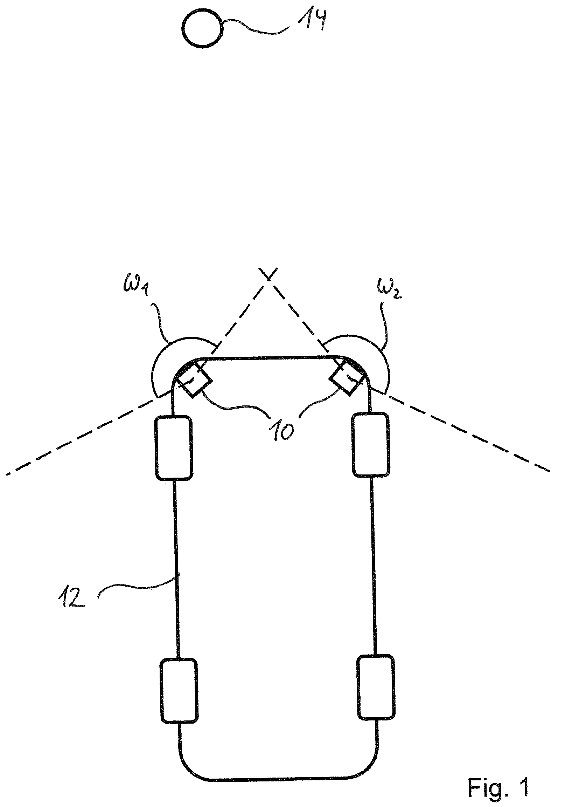

In Fig. 1 ist ein Fahrzeug 12 als Anwendungsbeispiel für die vorliegende Erfindung gezeigt. An der Front des Fahrzeugs 12 sind zwei Sensorvorrichtungen 10 angebracht, die jeweils einen Dauerstrich-Radarsensor, und zwar einen FMCW-MIMO-Radarsensor ("frequency modulated continuous wave radar", "multiple input multiple output") aufweisen. Allerdings ist darauf hinzuweisen, dass derartige Sensorvorrichtungen auch an anderen Positionen des Fahrzeugs 12 und/oder in anderer Anzahl am Fahrzeug 12 angebracht sein können.

In einiger Entfernung zum Fahrzeug 12 befindet sich ein Zielobjekt 14, welches zur Vermeidung einer Kollision durch die Sensorvorrichtungen 10 als solches erkannt werden soll. Zu diesem Zweck senden die Dauerstrich-Radarsensoren der beiden Sensorvorrichtungen 10 innerhalb von Erfassungswinkelbereichen ω₁, ω₂ in Messzyklen Primärsignale aus, die von dem Zielobjekt 14 reflektiert werden, wobei die reflektierten Sekundärsignale wiederum von den Dauerstrich-Radarsensoren empfangen und ausgewertet werden.

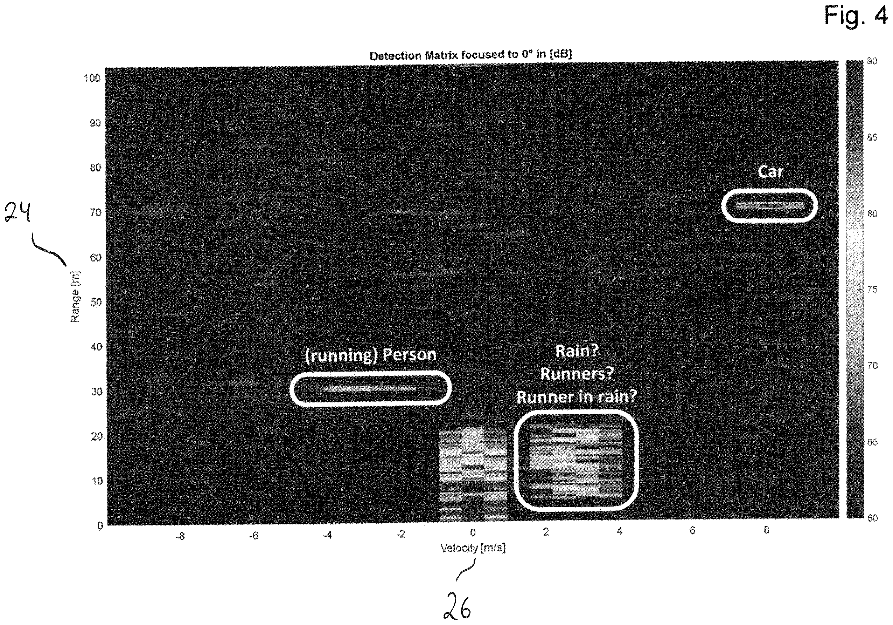

Um die von dem Zielobjekt 14 reflektierten Signale zuverlässig von Störsignalen, etwa durch Niederschlag oder Staub, abgrenzen zu können, wird erfindungsgemäß ein Winkelspektrum 16 gebildet. Vor dem Bilden des Winkelspektrums 16 kann dazu eine Detektionsmatrix 22 erstellt werden. Eine solche Detektionsmatrix 22, die eine Vielzahl von Bins auf Grundlage der empfangenen Sekundärsignale in einem jeden Messzyklus aufweist, zeigt etwa Fig. 4. Ein jeder Bin gibt dabei eine Signalstärke der reflektierten Signale für eine bestimmte radiale Entfernung 24 des Zielobjekts zu dem Radarsensor und für eine bestimmte relative Geschwindigkeit 26 des Zielobjekts zum Radarsensor an. Die Signalstärke wird dabei in Fig. 4 durch den Farbton bzw. die Helligkeit dargestellt. Jeder Bin entspricht demnach einer bestimmten radialen Entfernung und einer bestimmten Geschwindigkeit des Zielobjekts relativ zum Radarsensor. Die entsprechenden Reflexionen, das heißt die reflektierten Signale, werden dahingehend aufgelöst und einem jeden Bin zugeordnet, wobei die radiale Entfernung insbesondere durch eine Laufzeitanalyse wie zuvor beschrieben und die relative Geschwindigkeit des Zielobjekts insbesondere mittels Doppleranalyse ermittelt werden. Das Winkelspektrum wird dann beispielsweise nur für diejenigen Bins gebildet, welche eine Signalstärke oberhalb eines vorbestimmten Schwellwerts angeben, welcher so bemessen ist, dass dadurch mögliche Detektionen von Zielobjekten erkannt werden können. Da nur diese Bins grundsätzlich für eine mögliche Detektion in Frage kommen, wird auch nur bezüglich dieser Bins wie nachfolgend dargelegt eine Analyse mittels eines Winkelspektrums durchgeführt, ob lediglich ein Rauschen aufgrund von Störungen oder ein tatsächliches Zielobjekt vorliegt.

In Fig. 4 sind beispielsweise mehrere Bin-Bereiche erkennbar, welche für eine weitere Analyse in Betracht kommen. Entsprechend empfiehlt es sich, den Schwellwert so festzulegen, dass Bins, welche die entsprechende Signalstärke aufweisen, diesen Schwellwert überschreiten. Das Festlegen des Schwellwerts beruhte bisher auf Erfahrungswerten. In Fig. 4 kann beispielsweise bei einer radialen Entfernung 24 von 70 m ein Zielobjekt mit einer relativen Geschwindigkeit 26 von +8 m/s detektiert werden. Das dort zu erkennende Muster, nämlich Verteilung und Signalstärke der entsprechenden Bins, entspricht im Wesentlichen dem Muster eines Fahrzeugs als Zielobjekt. Zudem kann bei einer radialen Entfernung 24 von etwa 30 m ein Zielobjekt mit einer relativen Geschwindigkeit 26 von etwa - 1 m/s bis etwa -5 m/s detektiert werden. Aufgrund der "Verschmierung" in der Geschwindigkeitsdimension, bedingt durch die unterschiedlichen Geschwindigkeiten der einzelnen Körperteile wie Beine und Torso, entspricht dieses Muster einem Läufer. Ferner sind höhere Signalstärken des Sekundärsignale im Bereich von etwa +0,5 m/s bis +4 m/s und etwa 5 m bis 25 m erkennbar. Diesbezüglich liegt kein klares Muster vor, sodass bisher unklar war, ob etwa ein Läufer, eine Gruppe von Läufern oder schlicht Niederschlag Ursache der entsprechenden Reflexionen ist. Um dies zuverlässig zu ermitteln, schlägt die Erfindung die weitergehende Analyse mittels eines Winkelspektrums 16 insbesondere für die diskutierten Bins, deren Signalstärke den vorbestimmten Schwellwert überschreitet, vor.

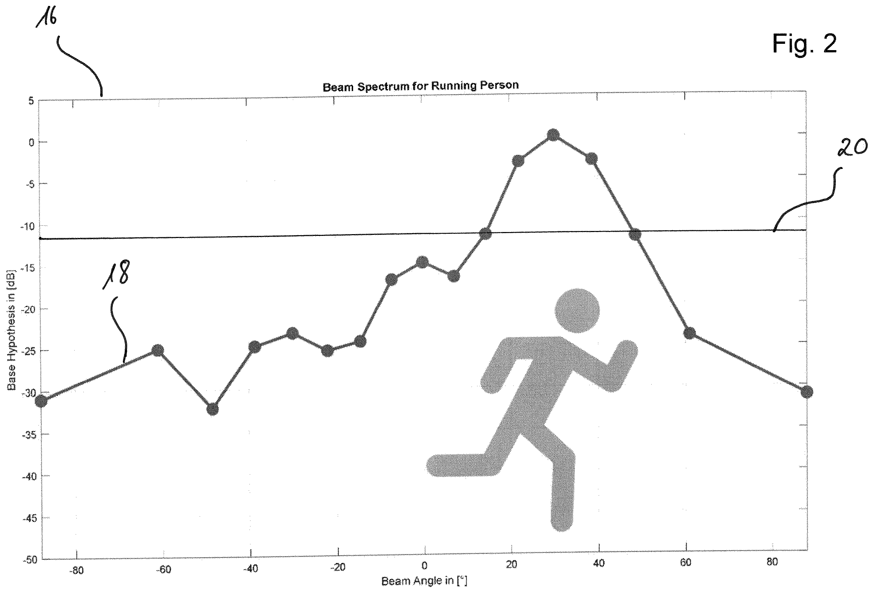

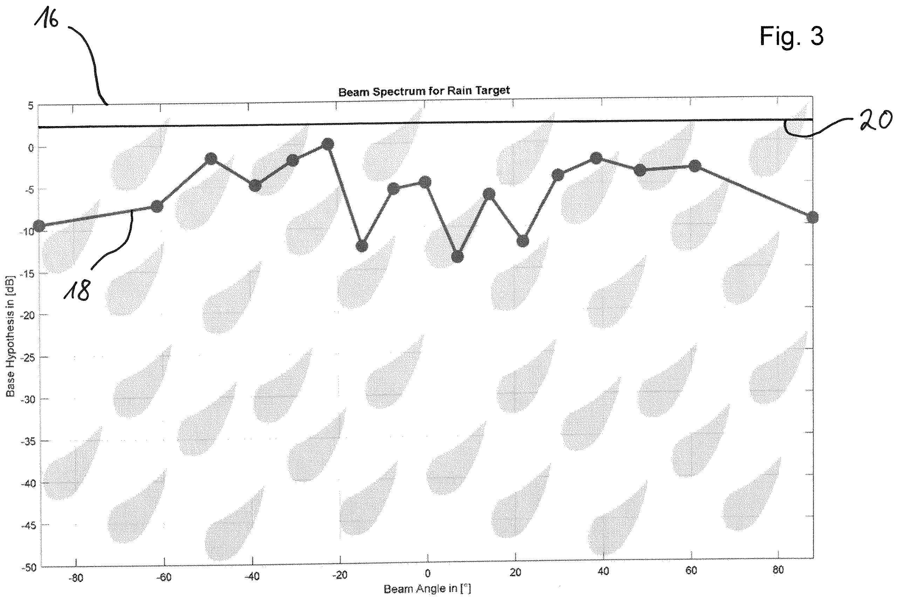

Fig. 2 zeigt eine graphische Darstellung eines typischen Winkelspektrums 16, wenn ein Läufer als Zielobjekt 14 im Erfassungsbereich der entsprechenden Sensorvorrichtung 10 anwesend ist. Fig. 3 zeigt eine weitere graphische Darstellung eines typischen Winkelspektrums 16, bei dem kein Zielobjekt im Erfassungsbereich der entsprechenden Sensorvorrichtung 10, jedoch Niederschlag vorhanden ist, welcher zu ungewollten Reflektionen führt und somit von den Sensorvorrichtungen 10 in Form von reflektierten Sekundärsignalen erfasst wird. Die Erfindung zielt darauf ab, diese ungewollten Reflektionen von Reflektionen von Zielobjekten zuverlässig unterscheiden zu können, um einerseits Zielobjekte zuverlässig zu detektieren und andererseits ungewollte Fehldetektionen durch Niederschlag, Staub oder andere Störungen zuverlässig zu vermeiden.

Das Bilden der Winkelspektren 16 ist insbesondere dann möglich, wenn es sich bei den Dauerstrich-Radarsensoren, wie hier, um MIMO-Radarsensoren handelt. Diese weisen mehrere Sendemodule mit jeweils einer Sendeantenne und mehrere Empfangsmodule mit jeweils einer Empfangsantenne auf, die jeweils einem Winkelbereich innerhalb des jeweiligen Erfassungswinkelbereichs ω₁, ω₂ relativ zum Radarsensor entsprechen, das heißt die Erfassungswinkelbereiche sind in mehrere Winkelbereiche unterteilt, die jeweils einem der Sendemodule und einem der Empfangsmodule zugeordnet sind. Die Anzahl der Sendemodule und der Empfangsmodule muss dabei nicht gleich sein. Die unterschiedlichen Sendeantennen der Sendemodule senden individuelle Primärsignale aus, sodass die empfangenen reflektierten Sekundärsignale der jeweiligen Sendeantenne zugeordnet werden können. Dadurch lassen sich Sekundärsignale genauer zuordnen.

Die Winkelspektren 16 gemäß Fig. 2 und 3 bilden jeweils den Signalstärkenverlauf 18 der entsprechenden reflektierten Signale über einen Winkel relativ zu der jeweiligen Sensorvorrichtung 10 ab.

Wie Fig. 2 zeigt, bildet sich im Winkelbereich von etwa 30° ein deutliches lokales Maximum des Signalstärkenverlaufs 18, wohingegen Fig. 3 einen Signalstärkenverlauf 18 zeigt, der zwar über den Winkel relativ zum Radarsensor variiert, sich jedoch innerhalb eines Bereichs von etwa 0 dB bis etwa -15 dB bewegt, ohne dass sich ein lokales Maximum bildet, welches deutlich aus diesem Bereich hervorsticht. Allerdings ist festzustellen, dass sich die Signalstärke in Fig. 3 aufgrund der Niederschlagsreflektionen auf einem anderen Niveau bewegt als in Fig. 2 (näherungsweise -15 dB bis -33 dB). Somit können Zielobjekte mittels einer starren Detektionsschwelle nicht zuverlässig ermittelt werden.

Erfindungsgemäß wird für das Winkelspektrum in Abhängigkeit von dem jeweiligen Signalstärkenverlauf 18 ein Rauschpegel ermittelt. Basierend auf diesem Rauschpegel wird sodann eine individuelle Detektionsschwelle 20 festgelegt. Da sich der Rauschpegel je nach Umgebungsbedingungen unterscheiden kann, wird damit auch die Detektionsschwelle 20 an diese Umgebungsbedingungen angepasst, das heißt bei Niederschlag wird die Detektionsschwelle 20 automatisch größer festgelegt als wenn kein Niederschlag vorhanden ist. Wie Fig. 2 und 3 zeigen, unterscheidet sich die Detektionsschwelle 20 in den beiden gezeigten Fällen, welche etwa bei -12 dB (Fig. 2) bzw. etwa 7 dB (Fig. 3) liegt.

Die Detektionsschwelle 20 wird insbesondere durch Anwenden eines Faktors auf den Rauschpegel bestimmt, der insbesondere 10, entsprechend 10 dB, betragen kann. Der Faktor wird insbesondere so gewählt, dass auch gewisse Schwankungen in der Signalstärke der reflektierten Sekundärsignale, die den Rauschpegel übersteigen, dennoch noch der Störung zugeordnet werden.

Da in Fig. 2 die Detektionsschwelle 20 lokal im Winkelbereich von etwa 16° bis 46° überschritten wird, wird in diesem Bereich ein Zielobjekt detektiert. Hingegen bleibt der Signalstärkenverlauf 18 in Fig. 3 steht unterhalb der Detektionsschwelle 20, sodass zutreffend kein Zielobjekt detektiert wird und insbesondere auch der Niederschlag nicht fehlerhaft als Zielobjekt detektiert wird.

Mit der Erfindung können Fehldetektionen, insbesondere Niederschlagsdetektionen, damit zuverlässig unterdrückt werden. Gleichzeitig werden Zielobjekte, insbesondere Hindernisse oder Personen, zuverlässig detektiert. Dies ist zudem durch Softwareanpassungen möglich, sodass der erzielte Effekt mit relativ geringem Aufwand und kostengünstig erreicht werden kann.

### Bezugszeichenliste

- 10: Sensorvorrichtung
- 12: Fahrzeug
- 14: Zielobjekt
- 16: Winkelspektrum
- 18: Signalstärkenverlauf
- 20: Detektionsschwelle
- 22: Detektionsmatrix
- 24: radiale Entfernung
- 26: relative Geschwindigkeit

- ω₁: Erfassungswinkelbereich
- ω₂: Erfassungswinkelbereich

## Patentansprüche

1. Verfahren zum Unterdrücken von Fehldetektion, insbesondere Niederschlagsdetektion, bei einem Radarsensor, insbesondere einem Puls-Doppler-Radarsensor, CW- oder FMCW-Radarsensor, welcher in Messzyklen Primärsignale aussendet und von Zielobjekten (14) reflektierte Sekundärsignale empfängt, wobei das Verfahren folgende Schritte umfasst:
- Bilden eines Winkelspektrums (16) für einen Teildatensatz der reflektierten Signale, wobei das Winkelspektrum (16) den Signalstärkenverlauf (18) der entsprechenden reflektierten Signale über einen Winkel (ω₁, ω₂) relativ zum Radarsensor angibt,
- Ermitteln eines Rauschpegels für das Winkelspektrum (16) in Abhängigkeit von dem Signalstärkenverlauf (18) und Bestimmen einer Detektionsschwelle (20) auf Grundlage des Rauschpegels und
- Detektieren von Zielobjekten (14) durch Abgleich des Winkelspektrums (16) mit der Detektionsschwelle (20).

2. Verfahren nach Anspruch 1,
**dadurch gekennzeichnet, dass** ein Zielobjekt (14) in den Winkelbereichen des Winkelspektrums (16) detektiert wird, in denen der Signalstärkenverlauf (18) die Detektionsschwelle (20) überschreitet.

3. Verfahren nach Anspruch 2,
**dadurch gekennzeichnet, dass** das Zielobjekt (14) nur dann detektiert wird, wenn ein zusammenhängender Winkelbereich, in dem der Signalstärkenverlauf (18) die Detektionsschwelle (20) überschreitet, kleiner als ein vorbestimmter maximaler Winkelbereich ist.

4. Verfahren nach einem der vorstehenden Ansprüche,
**dadurch gekennzeichnet, dass** der Rauschpegel durch Rauschschätzung ermittelt wird, wobei die Rauschschätzung vorzugsweise das Anwenden eines Medianfilters oder eines Mittelwertfilters auf den Signalstärkenverlauf (18) umfasst.

5. Verfahren nach einem der vorstehenden Ansprüche,
**dadurch gekennzeichnet, dass** die Detektionsschwelle (20) als ein Vielfaches des Rauschpegels bestimmt wird, wobei der Rauschpegel zur Bestimmung der Detektionsschwelle (20) vorzugsweise mit dem Faktor 10 multipliziert wird.

6. Verfahren nach einem der vorstehenden Ansprüche,
**gekennzeichnet durch** den Schritt:
- Erstellen einer Detektionsmatrix (22) mit einer Vielzahl von Bins auf Grundlage der empfangenen Sekundärsignale in einem jeden Messzyklus, wobei jeder Bin eine Signalstärke der reflektierten Signale für eine bestimmte radiale Entfernung des Zielobjekts (14) zu dem Radarsensor und für eine bestimmte Geschwindigkeit des Zielobjekts (14) angibt.

7. Verfahren nach Anspruch 6,
**dadurch gekennzeichnet, dass** der Teildatensatz durch die Bins der Detektionsmatrix (22) gebildet wird, welche eine Signalstärke oberhalb eines vorbestimmten Schwellwerts angeben.

8. Verfahren nach Anspruch 6 oder 7,
**dadurch gekennzeichnet, dass** die Geschwindigkeit des Zielobjekts (14) durch Durchführen einer Doppler-Analyse ermittelt wird.

9. Verfahren nach einem der vorstehenden Ansprüche,
**dadurch gekennzeichnet, dass** der (Dauerstrich-)Radarsensor als MIMO-Radarsensor mit mehreren Sendemodulen und mehreren Empfangsmodulen ausgebildet ist, wobei jedes Sende- und jedes Empfangsmodul einem Winkelbereich relativ zum Radarsensor entspricht.

10. Vorrichtung zur Datenverarbeitung, umfassend Mittel zur Ausführung des Verfahrens nach einem der Ansprüche 1 bis 9.

11. Computerprogramm, umfassend Befehle, die bei der Ausführung des Programms durch einen Computer diesen veranlassen, das Verfahren nach einem der Ansprüche 1 bis 9 auszuführen.

12. Computerlesbares Speichermedium, umfassend Befehle, die bei der Ausführung durch einen Computer diesen veranlassen, das Verfahren nach einem der Ansprüche 1 bis 9 auszuführen.

13. Sensorvorrichtung (10), umfassend
einen Radarsensor, insbesondere einen Puls-Doppler-Radarsensor, CW- oder FMCW-Radarsensor, der ausgebildet ist, in Messzyklen Primärsignale auszusenden und von Zielobjekten (14) reflektierte Sekundärsignale zu empfangen, und
eine Detektionseinheit, die ausgebildet ist,
- ein Winkelspektrum (16) für einen Teildatensatz der reflektierten Signale zu bilden, wobei das Winkelspektrum (16) den Signalstärkenverlauf (18) der entsprechenden reflektierten Signale über einen Winkel (ω₁, ω₂) relativ zum Radarsensor angibt,
- einen Rauschpegel für das Winkelspektrum (16) in Abhängigkeit von dem Signalstärkenverlauf (18) zu ermitteln und eine Detektionsschwelle (20) auf Grundlage des Rauschpegels zu bestimmen, und
- Zielobjekte (14) durch Abgleich des Winkelspektrums (16) mit der Detektionsschwelle (20) zu detektieren.

14. Sensorvorrichtung (10) nach Anspruch 13,
**dadurch gekennzeichnet, dass** der (Dauerstrich-)Radarsensor als MIMO-Radarsensor mit mehreren Sendemodulen und mehreren Empfangsmodulen ausgestaltet ist, wobei jedes Sende- und jedes Empfangsmodul einem Winkelbereich relativ zum Radarsensor entspricht.

15. Sensorvorrichtung (10) nach Anspruch 13 oder 14,
**dadurch gekennzeichnet, dass** die Detektionseinheit ausgebildet ist, eine Detektionsmatrix (22) mit einer Vielzahl von Bins auf Grundlage der empfangenen Sekundärsignale in einem jeden Messzyklus zu erstellen, wobei jeder Bin eine Signalstärke der reflektierten Signale entsprechend einer radialen Entfernung des Zielobjekts (14) zu dem Radarsensor und einer Geschwindigkeit des Zielobjekts (14) angibt.
